## Europäisches Patentamt
## European Patent Office
## Office européen des brevets

(19)

(11) Numéro de publication: **0 003 710**
**B1**

(12) **FASCICULE DE BREVET EUROPEEN**

(45) Date de publication du fascicule de brevet: **15.07.81**

(51) Int. Cl.³: **C 04 B 35/26, H 01 F 1/11**

(21) Numéro de dépôt: **79420006.3**

(22) Date de dépôt: **02.02.79**

(54) Procédé de préparation de poudres de ferrites et poudres ou aimants permanents ainsi obtenus.

(30) Priorité: **09.02.78 US 876355**

(43) Date de publication de la demande:
**22.08.79 Bulletin 79/17**

(45) Mention de la délivrance du brevet:
**15.07.81 Bulletin 81/28**

(84) Etats Contractants Désignés:
**DE GB NL SE**

(56) Documents cités:
**DE - B - 2 140 319**
**FR - A - 2 022 693**
**FR - A - 2 100 169**
**GB - A - 1 022 969**
**US - A - 3 853 975**

(73) Titulaire: **AIMANTS UGIMAG SA**
**Avenue d'Uriage**
**F-38830 Saint Pierre D'Allevard (FR)**

(72) Inventeur: **Lemaire, Henri**
**16, chemin St Jean**
**F-38700 La Tronche (FR)**
Inventeur: **Boeuf, Jean-Marie**
**12, rue Charrel**
**F-38000 Grenoble (FR)**
Inventeur: **Gerest, Pierre**
**Villa Isabelle**
**F-38580 Allevard (FR)**

(74) Mandataire: **Mougeot, Jean-Claude et al,**
**PECHINEY UGINE KUHLMANN 28, rue de Bonnel**
**F-69433 Lyon Cedex 3 (FR)**

Courier Press, Leamington Spa, England.

# 0 003 710

Procédé de préparation de poudres de ferrites et poudres ou aimants permanents ainsi obtenus

La présente invention est relative à un procédé de préparation de poudres de ferrites destinées à être incorporées dans un liant thermoplastique, ou thermodurcissable, ou élastomère, pour réaliser, après une mise en forme permettant l'orientation mécanique et/ou magnétique des particules, des aimants permanents agglomérés flexibles ou rigides à hautes caractéristiques magnétiques, et relative aux aimants permanents préparés avec la poudre de ferrite obtenue selon le procédé.

Deux techniques ont été signalées pour préparer de telles poudres. La plus ancienne consiste à calciner à haute température, entre 1200° et 1300°C, un mélange d'oxyde de fer $\alpha Fe_2O_3$ et de carbonate de baryum, de strontium ou de plomb, ou d'une association de ces divers carbonates. A la sortie du four de calcination, le ferrite, du fait de la haute température à laquelle il a été formé, se trouve fortement fritté. Il faut donc procéder à un broyage poussé pour obtenir une poudre dont la granulométrie soit voisine du micron. On est alors tenu, pour régénérer les propriétés magnétiques partiellement détruites au cours du broyage, de pratiquer un traitement de revenu entre 800° et 1100°C. La poudre de ferrite est alors prête à l'emploi.

L'autre technique, plus récente, consiste à incorporer au mélange d'oxydes de fer et de carbonates, avant calcination, un fondant de manière à favoriser la formation du ferrite, à basse température. Ou bien, ce fondant est introduit en quantité importante de manière à obtenir en chauffant un verre fondu, comme cela est décrit, par exemple, dans le brevet français n° 2 048 413, où le fondant ajouté est l'oxyde borique $B_2O_3$ dans une proportion molaire de 26,5% du total du mélange. Cette technique conduit à un prix de revient élevé à cause du coût et de la quantitié importante du fondant et de l'obligation où l'on est de l'éliminer de la poudre obtenue.

Ou bien, au contraire, le fondant — et il serait plus exact dans ce cas de parler de "minéralisateur" — est introduit dans le mélange en faible quantité de l'ordre de quelques %. On peut ainsi parachever la formation du ferrite en dessous de 1100°C, voire 1000°C, et il n'est plus alors utile de pratiquer un broyage; une simple désagrégation, suivie d'un lavage acide avec rinçage suffit pour que la poudre soit prête à l'emploi.

Dans le brevet anglais n° 1 022 969, divers sels abaissant la température de réaction sont indiqués, par exemple, halogénures (en particulier fluorures) ou chromates ou borates et utilisés pour abaisser la température de calcination quand on fait des aimants ferrite frittés (non calandrés).

Bien que les poudres ainsi obtenues n'aient pas été précédemment essayées sous forme d'aimant "composite" (poudre + liant), elles peuvent être incorporées à un élastomère et après calandrage, qui permet d'obtenir une orientation préférentielle des particules de ferrites, les produits obtenus ont des caractéristiques magnétiques exprimées par l'énergie spécifique BH max. se situant entre 8 et 11,2 kJ/m3 ($\simeq$ 1 et 1,4.10⁶ G—Oe).

On a cherché à obtenir des aimants flexibles présentant des caractéristiques magnétiques supérieures à 11,2 kJ/m3, en améliorant ce procédé.

Ainsi, le brevet français n° 2 104 252 décrit l'utilisation comme minéralisateur d'un mélange NaF + PbO. Mais, pour obtenir de bonnes caractéristiques magnétiques, il faut partir d'un oxyde de fer particulier $\alpha Fe_2O_3$ aciculaire, de grande surface spécifique (>20 m²/g) qui constitue une matière première coûteuse. De plus, l'emploi de l'oxyde de plomb est assez délicat, du fait de sa forte toxicité.

Le brevet français n° 2 104 251 propose d'ajouter comme minéralisateur soit un mélange $Bi_2O_3$ + NaF, soit du chlorure de baryum $BaCl_2$. On obtient des caractéristiques magnétiques intéressantes, mais les procédés décrits révèlent de graves inconvénients dès qu'on les transpose au stade industriel. Ainsi, $Bi_2O_3$ présente le même inconvénient que PbO, car il est assez fortement toxique.

Dans le cas de $BaCl_2$, il se forme, au cours de la calcination, de l'acide chlorhydrique qui peut provoquer la destruction partielle du ferrite. Dans les deux cas et, plus particulièrement dans le second, la température de calcination est assez élevée, supérieure à 1000°C, et la désagrégation du produit calciné se fait difficilement. Pour obtenir les caractéristiques magnétiques indiquées, il est nécessaire de procéder à un broyage, ce qui oblige à pratiquer un revenu de la poudre calcinée qui constitue donc une opération complémentaire.

Le présente invention se propose de remédier à ces inconvénients: elle permet, en effet, d'obtenir des poudres de ferrites incorporables dans un liant thermoplastique, ou thermodurcissable, ou élastomère, de manière à réaliser des aimants permanents agglomérés flexibles ou rigides à hautes caractéristiques magnétiques pouvant même aller jusqu'à une énergie spécifique BH max. de 14,3 kJ/m3, en utilisant pour préparer le mélange:

— des oxydes de fer courants de provenance variées (oxydes naturels, synthétiques ou de récupération) ou des mélanges de ces oxydes.

— des produits d'addition non toxiques sans procéder ni à un broyage ultérieur, ni à un revenu de poudres calcinées, le tout dans des conditions économiques satisfaisantes.

Selon l'invention, le procédé de préparation de poudres de ferrites de Ba, Sr et/ou Pb, destinées à être incorporées dans un liant thermoplastique, ou thermodurcissable, ou élastomère, pour obtenir, après une mise en forme permettant l'orientation mécanique et/ou magnétique des particules de ferrite, des aimants permanents agglomérés flexibles ou rigides à hautes caractéristiques magnétiques,

2

consiste à partir d'un mélange d'oxydes de fer $Fe_2O_3$ et d'un carbonate de Ba, Sr et/ou Pb, à calciner ce mélange, à le laver à l'acide, à le rincer et à le sécher, et se caractérise en ce qu'on ajoute au mélange de départ un ou plusieurs halogénures alcalins et/ou alcalino-terreux en proportion totale de 0,5 à 15% (de préférence 1 à 10%) du poids total du mélange et on ou plusieurs composés oxygénés du bore, en particulier des borates alcalins et alcalino-terreux, en proportion de 0,2 à 7% (de préférence 0,5 à 3%) du poids total de mélange et que la calcination se fait entre 850 et 1100°C (de préférence 900—1000°C) pendant au moins 15 minutes; les aimants permanents agglomérés obtenus avec les poudres faites selon ce procédé présentent des caractéristiques magnétiques notablement améliorées, qui les distinguent facilement de ceux préparés selon l'art antérieur.

La demanderesse a, en effet, constaté avec surpise que l'association de ces deux minéralisateurs présentait un effet synérgétique assez marqué, c'est-à-dire que le poudres réalisées selon l'invention permettent d'atteindre pour les aimants agglomérés des qualités magnétiques sensiblement supérieures à celles que l'on obtiendrait avec chacun des minéralisateurs pris séparément.

L'utilisation conjointe de ces deux minéralisateurs conduit à des particules monodomaines indépendantes de l'ordre de 1 $\mu$m, possédant une forme caractérisée par une anisotropie élevée, particulièrement utile pour l'orientation mécanique.

De plus, l'introduction de faible quantité de bore ou de fluor dans le réseau des atomes d'oxygène peut être utile pour empêcher l'apparition de défauts lors du calandrage, les défauts jouant un rôle majeur dans le renversement de l'aimantation.

La poudre de matériau magnétique préparée selon l'invention présente une courbe de distribution granulométrique reliant la coercivité intrinsèque de chaque taille de grains à leur fraction volumique, cette courbe pouvant être contrôlée de telle sorte qu'après avoir incorporé la poudre à un liant et calandré, elle présente moins de 15% en volume de la quantité de grains ayant une coercivité intrinsèque inférieure à 23,9 kA/m ou moins de 30% en volume de la quantité de grains ayant une coercivité de moins de 199 kA/m. Dans ces conditions, les aimants présentent toujours une coercivité intrinsèque supérieure à 191 kA/m.

L'halogénure utilisé préférentiellement est le fluorure de sodium. Le borate utilisé préférentiellement est le tétraborate de soude hydraté $B_4O_7Na_2.10\,H_2O$ qui se présente en poudre impalpable de très grande surface spécifique. On obtient de bons résultats lorsque la proportion en poids dans le mélange de départ du fluorure de sodium est de 2 à 5 fois environ la proportion pondérale en tétraborate et, plus particulièrement lorsqu'on a de 0,5% à 3% de $B_4O_7Na_2 \cdot 10\,H_2O$ et 3 à 10% de NaF.

Les oxydes de fer utilisés peuvent être de nature très variée, ce qui permet de les approvisionner dans les meilleures conditions économiques du moment. Ce peut être des oxydes naturels, des oxydes synthétiques, des oxydes obtenus par récupération de produits sidérurgiques (oxydes "expikling") par exemple en craquant à haute température une solution de chlorure de fer, des hydroxydes de fer ou un mélange de ces divers oxydes ou hydroxydes. Ces oxydes sont broyés jusqu'à les amener à une surface spécifique supérieure à 5 $m^2/g$. On pourrait, d'ailleurs, se contenter de surfaces spécifiques encore plus faibles, si l'on ne s'intéresse qu'aux caractéristiques magnétiques de rémanence.

Les oxydes et les carbonates peuvent être mélangés sous forme de poudres, en milieu liquide et solide. La carbonate est, de préférence, du carbonate de baryum et le rapport molaire

$$n = \frac{Fe_2O_3}{BaCO_3}$$

se situe entre 4,6 et 6,2.

Les minéralisateurs peuvent être introduits dans le mélange soit à sec, soit par voie humide.

Le mélange oxyde-carbonate-borate-halogénure est alors calciné entre 900°C et 1000°C dans un four à circulation d'air pendant une durée allant de 15 minutes à quelques heures suivant les matériaux de départ. Le produit obtenu est alors désagrégé, puis lavé par exemple à l'acide chlorhydrique dilué à 5%, le tout étant porté pendant 15 minutes à l'ébullition. Il est enfin rincé jusqu'à obtenir un pH pratiquement neutre et séché. La poudre incorporée dans une matrice élastomère, thermoplastique ou thermodurcissable servant de liant grâce à un mélangeur interne, le mélange poudre-liant subit alors une opération de mise de forme par calandrage, extrusion, injection ou compression, qui confère aux particules de ferrite une orientation mécanique et donne au produit la forme désirée. Cette opération peut se faire, le cas échéant, en présence d'un champ magnétique, ce qui améliore encore les caractéristiques magnétiques.

L'invention sera encore illustrée par un certain nombre d'exemples particuliers issus des expériences faites par la demanderesse, dans les conditions opératoires suivantes:

— mélange de l'oxyde de fer, du carbonate de baryum et de l'halogénure par brassage rapide à sec,

— addition de borate dissous dans l'eau. On obtient une boue que l'on brasse soigneusement avant de la sécher et de la désagréger,

— calcination au four pendant 1 heure à 950°C et désagrégation,

# 0 003 710

— lavage dans une solution d'HCL à 5% portée à l'ébullition pendant 15 minutes,
— rinçages successifs de 15 minutes dans de l'eau à ébullition,
— séchage de la poudre dans une étuve à 150°C,
— introduction dans du caoutchouc à raison de 90% de poudre pour 10% de caoutchouc en poids et calandrage.

Les teneurs des différents constituants sont exprimés en % du poids total du mélange de départ.
Les caractéristiques magnétiques obtenues pour l'aimant souple sont exprimées avec les unités suivantes:

— induction rémanente après saturation  $\qquad$  Br en Tesla

— champ coercitif  $\qquad$  Hc en kA/m

— coercivité intrinsèque  $\qquad$  iHc en kA/m

— énergie spécifique  $\qquad$  BHmax en kJ/m3

## EXEMPLE 1

Dans cet exemple, on a comparé les résultats obtenus en introduisant du borate seul (A), du fluorure seul (B) et un mélange borate + fluorure (C)

### TABLEAU I

| | | A | B | C |
|---|---|---|---|---|
| Mélange de départ | $Fe_2O_3$ | 80,7 | 77,0 | 75,8 |
| | $BaCO_3$ | 17,8 | 17,0 | 16,7 |
| | NaF | — | 6,0 | 6,0 |
| | $B_4O_7Na_2$ | 1,5 | — | 1,5 |
| Résultats | Br | 0,252 | 0,246 | 0,265 |
| | Hc | 177 | 179 | 189 |
| | iHc | 303 | 351 | 255 |
| | BHmax | 11,9 | 11,4 | 14,1 |

On constate l'effet synergétique marqué de l'addition fluorure + borate par rapport aux additions de l'un ou de l'autre des minéralisateurs. Cet effet est net aussi bien sur l'induction que sur le champ coercitif et se traduit par excellence sur l'énergie spécifique.

## EXEMPLES 2 à 9

Au cours d'une autre série d'expériences, on a fait varier simultanément les teneurs en NaF et en $B_4O_7Na_2$. Les résultats apparaissent dans le tableau II.

4

TABLEAU II

| Exemples n^ | 2 | 3 | 4 | 5 | 6 | 7 | 8 | 9 |
|---|---|---|---|---|---|---|---|---|
| $Fe_2O_3$ | 78,2 | 77,8 | 77,4 | 77,0 | 76,6 | 76,2 | 75,8 | 75,4 |
| $BaCO_3$ | 17,3 | 17,2 | 17,1 | 17,0 | 16,9 | 16,8 | 16,7 | 16,6 |
| NaF | 4,0 | 4,0 | 4,0 | 4,0 | 6,0 | 6,0 | 6,0 | 6,0 |
| $B_4O_7Na_2$ | 0,5 | 1,0 | 1,5 | 2,0 | 0,5 | 1,0 | 1,5 | 2,0 |
| Br | 0,255 | 0,263 | 0,250 | 0,248 | 0,258 | 0,265 | 0,269 | 0,267 |
| Hc | 183 | 187 | 165 | 166 | 188 | 193 | 192 | 186 |
| iHc | 271 | 254 | 294 | 294 | 278 | 291 | 239 | 258 |
| BHmax | 12,3 | 13,4 | 11,5 | 11,4 | 12,8 | 13,5 | 14,0 | 13,6 |

EXEMPLES 10 à 12

On a substitué à NaF un chlorure (NaCl) et un iodure (IK) et au tétraborate de Na, un diborate de Ca. Les résultats sont reportés au tableau III.

TABLEAU III

| Exemples n° | 10 | 11 | 12 |
|---|---|---|---|
| $Fe_2O_3$ | 76,2 | 79,5 | 77,8 |
| $BaCO_3$ | 16,8 | 17,5 | 17,2 |
| NaF | 6,0 | IK     1,5 | NaCl   4,0 |
| $Ca(BO_2)_2$ | 1,0 | $B_4O_7Na_2$ 1,5 | $B_4O_7Na_2$ 1,0 |
| Br | 0,261 | 0,263 | 0,266 |
| Hc | 189 | 178 | 191 |
| iHc | 282 | 248 | 374 |
| BHmax | 13,2 | 13,1 | 13,7 |

**Revendications**

1. Procédé de préparation d'une poudre de ferrite à structure magnétoplombite permettant de fabriquer un aimant permanent à hautes caractéristiques magnétiques par l'incorporation de cette poudre dans un liant élastomère, thermoplastique ou thermodurcissable, un alignement de cette poudre par des moyens mécaniques et/ou magnétiques, procédé consistant à partir d'un mélange d'oxydes de fer $Fe_2O_3$ et d'au moins un carbonate de Ba, Sr et/ou Pb, à calciner le mélange, caractérisé en ce qu'on ajoute au mélange initial au moins un halogénure alcalin et/ou alcalino-terreux en proportion totale de 0,5 à 15% (de préférence de 1 à 10%) du poids total de mélange et un ou plusieurs composés oxygénés du bore, en particulier des borates alcalins et/ou alcalino-terreux en proportion de 0,2 à 7% (de préférence 0,5 à 3%) du poids total du mélange et que la calcination se fait entre 850 et 1100°C (de préférence 900—1000°C) pendant au moins 15 minutes.

2. Procédé selon la revendication 1, caractérisé en ce que l'halogénure alcalin est NaF.

3. Procédé selon l'une des revendications 1 ou 2, caractérisé en ce que le borate alcalin est $B_4O_7Na_2 \cdot 10\ H_2O$.

4. Procédé selon la revendication 3, caractérisé en ce que la proportion pondérale en NaF dans le mélange est comprise entre 2 et 5 fois la proportion de tétraborate.

5. Procédé selon la revendication 4, caractérisé en ce que la quantité de tétraborate est de 0,5 à 3% en poids du mélange et que le NaF est présent entre 3 et 10% du poids du mélange.

6. Procédé suivant l'une des revendications 1 à 5, caractérisé en ce que le composé oxygéné du bore est introduit à l'état dissous.

7. Matériau magnétique préparé selon l'une des revendications 1 à 6, caractérisé en ce que sa courbe de distribution granulométrique est telle que, après introduction d'un liant et calandrage, moins de 15% en volume des grains aient une coercivité intrinsèque inférieure à 23,9 kA/m et/ou moins de 30% (en volume) des grains aient une coercivité intrinsèque inférieure à 199 kA/m.

8. Aimant préparé avec le matériau décrit dans la revendication 7, caractérisé en ce que sa coercivité intrinsèque est supérieure à 191 kA/m.

**Patentansprüche**

1. Verfahren zur Herstellung eines Ferritpulvers mit Magnetoplumbitstruktur, das es ermöglicht, durch den Zusatz dieses Pulvers in ein elastomeres, thermoplastisches oder wärmehärtbares Bindemittel und eine Ausrichtung dieses Pulvers durch mechanische und/oder magnetische Mittel einen Dauermagnet mit hoher magnetischer Charakteristik herzustellen, welches Verfahren darin besteht, von einem Gemisch aus Eisenoxiden $Fe_2O_3$ und wenigstens einem Karbonat von Ba, Sr und/oder Pb auszugehen und das Gemisch zu kalzinieren, dadurch gekennzeichnet, daß man dem Ausgangsgemisch wenigstens ein Alkalimetall- und/oder Erdalkalimetallhalogenid in einer Gesamtmenge von 0,5 bis 15% (vorzugsweise 1 bis 10%) des Gesamtgewichts des Gemisches und eine oder mehrere sauerstoffhaltige Verbindungen des Bors, insbesondere Alkalimetall- und/oder Erdalkalimetallborate, in einer Menge von 0,2 bis 7% (vorzugsweise 0,5 bis 3%) des Gesamtgewichts des Gemisches zusetzt und daß die Kalzinierung zwischen 850 und l 100°C (vorzugsweise 900—1000°C) während wenigstens 15 Minuten erfolgt.

2. Verfahren nach Anspruch 1, dadurch gekennzeichnet, daß das Alkalimetallhalogenid NaF ist.

3. Verfahren nach einem der Ansprüche 1 oder 2, dadurch gekennzeichnet, daß das Alkalimetallborat $B_4O_7Na_2.10\ H_2O$ ist.

4. Verfahren nach Anspruch 3, dadurch gekennzeichnet, daß der Gewichtsanteil an NaF im Gemisch zwischen dem Zwei- und Fünffachen des Tetraboratanteils ist.

5. Verfahren nach Anspruch 4, dadurch gekennzeichnet, daß die Tetraboratmenge 0,5 bis 3 Gewichts-% ist und daß das NaF zwischen 3 und 10 Gewichts-% des Gemisches vorliegt.

6. Verfahren nach einem der Ansprüche 1 bis 5, dadurch gekennzeichnet, daß die sauerstoffhaltige Verbindung des Bors im gelösten Zustand eingeführt wird.

7. Nach einem der Ansprüche 1 bis 6 hergestelltes magnetisches Material, dadurch gekennzeichnet, daß seine Korngrößenverteilungskurve derart ist, daß nach Einführung eines Bindemittels und Kalandrierung weniger als 15 Volumen-% der Körner eine eigene Koerzitivkraft unter 23,9 kA/m und/oder weniger als 30% (nach Volumen) der Körner eine eigene Koerzitivkraft unter 199 kA/m haben.

8. Mit dem im Anspruch 7 beschriebenen Material hergestellter Magnet, dadurch gekennzeichnet, daß seine eigene Koerzitivkraft über 191 kA/m ist.

**Claims**

1. A process to prepare ferrite powder having a magnetoplumbite structure in order to manufacture permanent magnets with high magnetic properties, by incorporating such a powder in a thermoplastic, thermosettable or elastomeric binder and orientating it by mechanic and/or magnetic means, process consisting of preparing a mixture of $Fe_2O_3$ iron oxides and at least one carbonate of Ba, Sr, or Pb and calcining said mixture, characterised in that at least one alkaline or alkaline-earth halide in a total amount of 0.5% to 15% of the total weight said mixture, and at least one oxygenated boron compound, particularly an alkaline or alkaline-earth borate, in a total amount of 0.2 to 7% preferably between 0.5 to 3% of the weight of said mixture is added to said mixture and the mixture is calcined between 850 and 1100°C (preferably between 900 and 1000°C) for at least 15 minutes.

2. A process according to claim 1, characterised in that the alkaline halide is NaF.

3. A process according to claim 1 or 2, characterised in that the alkaline borate is $B_4O_7Na_2$, 10 $H_2O$.

4. A process according to claim 3, characterised in that the powdered proportion of NaF in the mixture is between 2 and 5 times the proportion of the tetraborate.

5. A process according to claim 4, characterised in that the amount of tetraborate is between 0.5 to 3% weight % of the mixture and the amount of NaF is between 3 and 10 weight % of the mixture.

6. A process according to one of the claims 1 to 5 characterised in that the oxygenated boron compound is introduced in the dissolved state.

7. A magnetic material prepared by the process according to one of the claims 1 to 6, characterised in that the distribution curve of the individual grains after introduction in a binder and calendering to get a permanent magnet, is such that the volume % of grains having an intrinsic coercivity lower than 199 kA/m and/or the volume % of grains having an intrinsic coercivity lower than 23,9 kA/m are respectively lower than 30% and 15% of the total volume of the grains.

8. Permanent magnet manufactured with a magnetic material obtained in accordance to claim 7, having an intrinsic coercivity higher than 191 kA/m.